# EUROPÄISCHE PATENTSCHRIFT

(11) **EP 2 775 184 B1**
(45) Veröffentlichungstag und Bekanntmachung des Hinweises auf die Patenterteilung: **14.06.2017**
(21) Anmeldenummer: 14000205.6
(22) Anmeldetag: 21.01.2014
(51) Int. Cl.: F16L 11/10

(54) **Sanitärschlauch mit einem Innenschlauch und einer Ummantelung**
Sanitary hose with an inner tube and a sheathing
Flexible sanitaire comprenant un flexible intérieur et une enveloppe

(30) Priorität: 07.03.2013 DE 102013003831
(43) Veröffentlichungstag der Anmeldung: 10.09.2014
(73) Patentinhaber: Neoperl GmbH, 79379 Müllheim (DE)
(72) Erfinder: Kury, Werner, 79379 Müllheim (DE)
(74) Vertreter: Börjes-Pestalozza, Henrich

(56) Entgegenhaltungen:
- EP-A1- 0 148 099
- EP-A1- 0 465 837
- EP-A1- 0 806 596
- EP-A1- 2 048 422
- EP-A2- 0 069 957
- EP-A2- 0 380 841
- WO-A1-01/92771
- US-B1- 6 302 152

## Beschreibung

Die Erfindung betrifft einen Sanitärschlauch mit einem Innenschlauch, insbesondere aus Kunststoff, und mit einer den Innenschlauch umschließenden, aus sich kreuzenden Geflechtteilen geflochtenen Ummantelung, von welchen Geflechtteilen wenigstens eines der Geflechtteile als einstückiges Bändchen ausgebildet ist, dessen Breite größer als seine Dicke und dessen breite Seite dem Innenschlauch zugewandt ist, wobei die Querschnittsdicke des ein Geflechtteil bildendes Bändchens an wenigstens einem seiner Ränder oder an beiden Rändern abnimmt.

Aus der WO 01/92771 A1 kennt man bereits einen Schlauch der eingangs erwähnten Art, der als Hydraulikleitung bestimmt ist, aber gegebenenfalls auch als Sanitärschlauch verwendbar wäre. Der vorbekannte Schlauch weist einen Innenschlauch aus Kunststoff auf, der mit einer den Innenschlauch umschließenden und aus sich kreuzenden Geflechtteilen geflochtenen Ummantelung verstärkt ist. Dabei sind die einander kreuzenden Geflechtteile jeweils als einstückiges Bändchen ausgebildet, das einen rechteckigen und in den Eckbereichen dieser Rechteckform gerundeten Bändchen-Querschnitt aufweist, wobei die Querschnittsdicke jedes ein Geflechtteil bildenden Bändchens an wenigstens einem seiner Ränder oder an beiden Rändern abnimmt. In diese Bändchen sind runde oder ebenfalls rechteckig abgeflachte und mit runden Eckbereichen versehene Stahldrähte eingearbeitet, die von einer den Außenumriss der Bändchen bestimmenden Schicht aus einem beispielsweise thermoplastischen Kunststoff umhüllt sind.

Ein Sanitärschlauch ist beispielsweise in der EP 1 880 812 B1 vorbeschrieben. Ferner ist aus DE 197 27 142 A1 ein Wasserschlauch bekannt, bei welchem wie bei dem vorbekannten Sanitärschlauch die Geflechtteile als Gruppen von nebeneinander verlaufenden Fäden oder Drähten ausgebildet sind, wobei diese Gruppen jeweils miteinander verflochten sind und sich demgemäß in Gebrauchsstellung kreuzen.

Die EP 0 465 837 A1 betrifft einen radial bewehrten Kunststoffschlauch, insbesondere mit gleitfähiger Oberfläche, wobei dieser einen Innenschlauch aus weichem thermoplastischem oder elastomerem Kunststoff, eine ring- oder spiralförmige Kunststoff-Bewehrung und eine Umflechtung aus thermoplastischem oder elastomerem Kunststoff aufweist.

Die EP 2 048 422 A1 betrifft einen Flechtschlauch, insbesondere für einen Armaturen- oder Brauseschlauch, mit einem Innenschlauch und einem darüber angeordneten Geflecht aus metallisierten und metallisch eingefärbten Geflechtsbestandteilen.

Eine solche aus Drähten oder Fäden geflochtene Ummantelung weist häufig insbesondere an den Kreuzungsstellen Lücken auf, die durch die Querschnittsform der einzelnen randseitigen Drähte oder Filamente entstehen, sodass der Zutritt von Licht und Feuchtigkeit möglich ist und der Innenschlauch durch das UV-Licht angegriffen wird. Darüber hinaus können im Inneren des Innenschlauches bei solchem Lichtzutritt Algen entstehen.

Ferner kann bei einer Biegung des Schlauches dessen Ummantelung die vorerwähnte zu geringe Überdeckung aufweist, dieser Schlauch die Ummantelung im Biegungsbereich teilweise verdrängen und sogar aus dieser Ummantelung hervortreten.

Es besteht deshalb die Aufgabe, einen Sanitärschlauch der eingangs genannten Art zu schaffen, bei welchem der Überdeckungsgrad der geflochtenen Ummantelung insbesondere auch im Bereich sich kreuzender Geflechtteile verbessert ist.

Diese Aufgabe wird mit den Mitteln und Merkmalen des Anspruchs 1 gelöst.

Bei dem erfindungsgemäßen Sanitärschlauch mit einer aus sich kreuzenden Geflechtteilen geflochtenen Ummantelung ist vorgesehen, dass sich die Ränder des Bändchens im Querschnitt gesehen gestuft oder stetig verjüngen, und dass zumindest eine der breiten Seiten des Bändchens zwischen dessen Rändern im Querschnitt gesehen gewellt ist und der Querschnitt des einstückigen Bändchens aus nebeneinander abwechselnd dickeren und dünneren Bereichen besteht.

Somit weist dieses Geflechtteil keine einzelnen Drähte oder Kunststofffilamente auf, sodass dieses Geflechtteil schon in sich selbst eine höhere Stabilität als ein solches aus Einzeldrähten und Einzelfilamenten hat. Darüber hinaus ist ein entsprechend festes und stabiles Geflecht mit guter Überdeckung in den Randbereichen der Geflechtteile möglich.

Besonders zweckmäßig ist es dabei, wenn alle in Gebrauchsstellung miteinander verflochtenen und sich kreuzenden Geflechtteile als Bändchen oder einstückige Bändchen ausgebildet sind. Solche Bändchen können einander auch im Kreuzungsbereich berührend geflochten werden und erlauben dabei eine dichte Ausbildung der Ummantelung und damit eine gute Überdeckung.

Die Ausgestaltung der Erfindung sieht vor, dass die Querschnittsdicke des ein Geflechtteil bildenden Bändchens an wenigstens einem seiner Ränder oder bevorzugt an beiden Rändern abnimmt und dass sich die Ränder des Bändchens im Querschnitt gesehen gestuft oder stetig verjüngen. Dadurch können sich vor allem querverlaufende Bändchen an der Kreuzungsstelle, an welcher sie durch den Flechtvorgang ihr Niveau ändern und zunächst über ein solches Bändchen und dann unter ein solches Bändchen laufen, an diese Querschnittsabnahmen anpassen und eine praktisch geschlossene Überdeckung auch an den Kreuzungsstellen ergeben. Es wird also die erfindungsgemäße Ausbildung der Geflechtteile als einstückige Bändchen dazu benutzt, diesen Bändchen einen Querschnitt zu geben, der das gegenseitige Anliegen sich kreuzender Bändchen auch an den Randbereichen erheblich verbessert und somit die Dichtigkeit der Ummantelung erhöht.

Günstig ist es dabei, wenn jede Verjüngung an den beiden Rändern des Bändchens symmetrisch zu der zwischen den breiten Seiten des Bändchens angeordneten Längsmitte und/oder zu der zwischen den Rändern verlaufenden Mitte ist. Somit ergeben sich an beiden Rändern des Bändchens übereinstimmende, allerdings nach entgegengesetzten Seiten gerichtete Verjüngungen, die mit sich kreuzenden Bändchen die beschrieben günstige Auswirkung auf die Dichtigkeit der Ummantelung haben, wobei der weitere Vorteil ermöglicht wird, die Bändchen in beliebiger Orientierung und möglicherweise sogar gewendet in gleicher Weise benutzen zu können.

Da zumindest eine der breiten Seiten des Bändchens zwischen dessen Rändern im Querschnitt gesehen gewellt ist und da der Querschnitt des einstückigen Bändchens dadurch aus nebeneinander abwechselnd dickeren und dünneren Bereichen besteht, ist das Bändchen auch bei der Anpassung an die Rundung des zu umflechtenden Innenschlauchs entsprechend flexibel, wobei möglicherweise bei dem Querschnitt eine der breiten Seiten gewellt und die andere geradlinig ausgebildet sein können.

Das Ende des Querschnitts der Verjüngung des Randes wenigstens einer Längsseite oder beider Längsseiten des Bändchens kann spitz oder verrundet sein. Dabei ist eine spitze Querschnittsform besonders gut an kreuzende Bändchen anpassbar und anlegbar, während eine zumindest geringfügig verrundete Ausführungsform leichter zu handhaben ist und vor allem auch bei einer Ausführungsform aus Metall eine geringere Verletzungsgefahr bedeutet.

Der Querschnitt der Verjüngung am Rand des Bändchens kann geradlinig oder wenigstens einseitig konvex oder konkav begrenzt sein. Diese Form kann dabei danach gewählt werden, wie sich kreuzende Bändchen an einer solchen Kreuzungsstelle biegen und verformen und an den entsprechenden Rand anpassen lassen.

Je nach Querschnittsdicke der erfindungsgemäßen Bändchen kann der von den die Verjüngung begrenzenden Flächen eingeschlossene Winkel unterschiedlich bemessen sein. Zweckmäßig ist es, wenn es ein spitzer Winkel, insbesondere ein rechter oder ein demgegenüber kleinerer Winkel von 90° bis 20°, insbesondere von 70° bis 40°, vorzugsweise von 60° bis 50° ist. Es ergeben sich dann an den Rändern im Bereich von deren Verjüngung Schrägflächen, an die sich kreuzende Bändchen oder Geflechtteile bei der Bildung der geflochtenen Ummantelung gut anpassen und anlegen können, sodass eine dichte Überdeckung entsteht.

Dabei kann die Querschnittsdicke des Bändchens zwischen seinen Verjüngungen etwa ein Zehntel Millimeter bis zwei Fünftel Millimeter, vorzugsweise ein Fünftel Millimeter bis ein Viertel Millimeter und die Gesamtbreite etwa ein ein Viertel Millimeter bis zwei Millimeter oder mehr oder einen Zwischenwert betragen. Die Wahl der Gesamtbreite und auch der Querschnittsdicke kann zum Beispiel davon abhängen, welchen Durchmesser der Innenschlauch hat. Je größer dieser ist, umso größer können auch die genannten Maße gewählt sein.

Dabei kann die Relation der Breite des Bändchens zu seiner Querschnittsdicke ebenfalls unterschiedlich gewählt sein. Beispielsweise kann die Breite des Bändchens fünfmal bis zwanzigmal, siebenmal bis zehnmal, zweimal bis achtmal oder viermal bis sechsmal so groß wie seine Dicke sein. Auch dabei sind Zwischenwerte möglich.

Die beste Flexibilität quer zur Längserstreckung ergibt sich, wenn beide breiten Seiten des Bändchen zwischen dessen Rändern im Querschnitt gesehen gewellt sind und wenn dabei die Wellenberge und die Wellentäler der beiden breiten Seiten des Bändchens insbesondere an übereinstimmenden Stellen angeordnet sind, sodass sich dickere und dünnere Querschnittsbereiche über die Breite des Bändchens verteilt abwechseln.

Die Geflechtteile der Ummantelung können aus Metall und/oder aus Kunststoff bestehen und alle Geflechtteile einer Ummantelung können dabei aus demselben Werkstoff bestehen oder Geflechtteile aus Metall und solche aus Kunststoff können zur Bildung der Ummantelung gemischt vorgesehen sein.

Vor allem bei Kombination einzelner oder mehrerer der vorbeschriebenen Merkmale und Maßnahmen ergibt sich ein Sanitärschlauch mit einem Innenschlauch und einer geflochtenen Ummantelung, bei welcher auch die Bereiche, wo zwei sich kreuzende Geflechtteile unmittelbar einen Winkel miteinander bilden, weitgehend dicht sein können, insbesondere wenn die Randbereiche der die Geflechtteile bildenden Bändchen sich von einer mittleren oder größeren Dicke ausgehend verjüngen, sodass querliegende Bereiche von kreuzenden Geflechtteilen auf den die Verjüngung bildenden Schrägflächen aufliegen können und so die Überdeckung verbessern. Nachstehend ist ein Ausführungsbeispiel der Erfindung anhand der Zeichnung näher beschrieben. Es zeigt in zum Teil schematisierter Darstellung:
- Fig. 1: eine Ansicht und
- Fig. 2: einen Teillängsschnitt eines Sanitärschläuchs gemäß dem Stand der Technik, wobei sich kreuzende Geflechtteile aus einzelnen Drähten oder Filamenten bestehen, die gruppenweise nebeneinander liegen und derartige Gruppen von Drähten oder Filamenten analog EP 1 880 812 B1 sich kreuzend angeordnet sind,
- Fig. 3: eine Ansicht eines erfindungsgemäßen Sanitärschlauchs und
- Fig. 4: einen Teillängsschnitt dieses erfindungsgemäßen Sanitärschlauchs, wobei die geflochtene Ummantelung aus sich kreuzenden Geflechtteilen gebildet ist, die als einstückige Bändchen ausgebildet sind, deren Breite größer als ihre Querschnittsdicke ist, wobei die Querschnittsdicke der Bändchen an den einander gegenüberliegenden Rändern sich stetig vermindert und konisch ausgebildet ist.

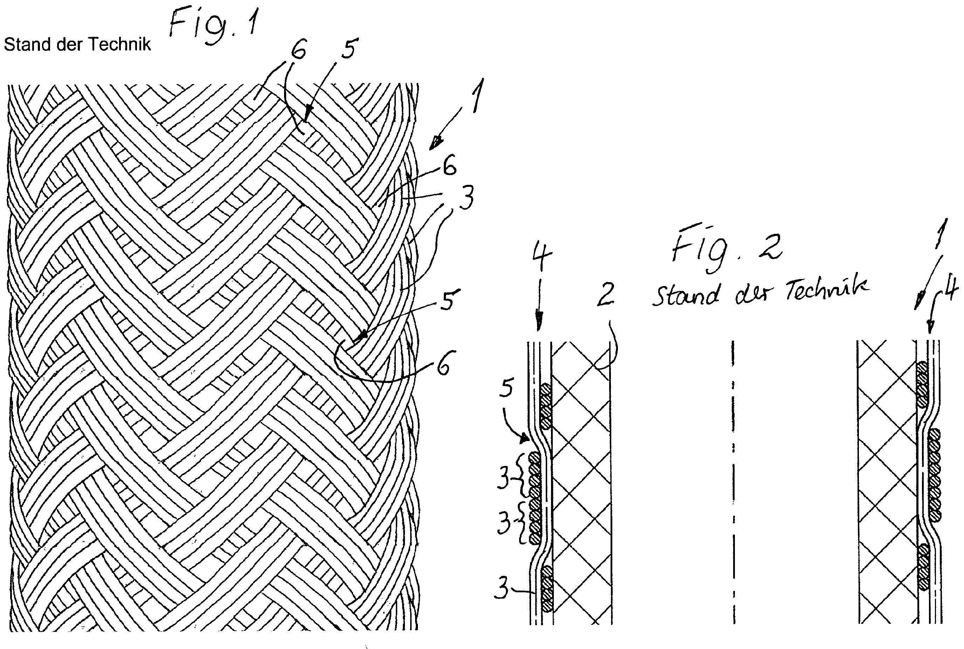

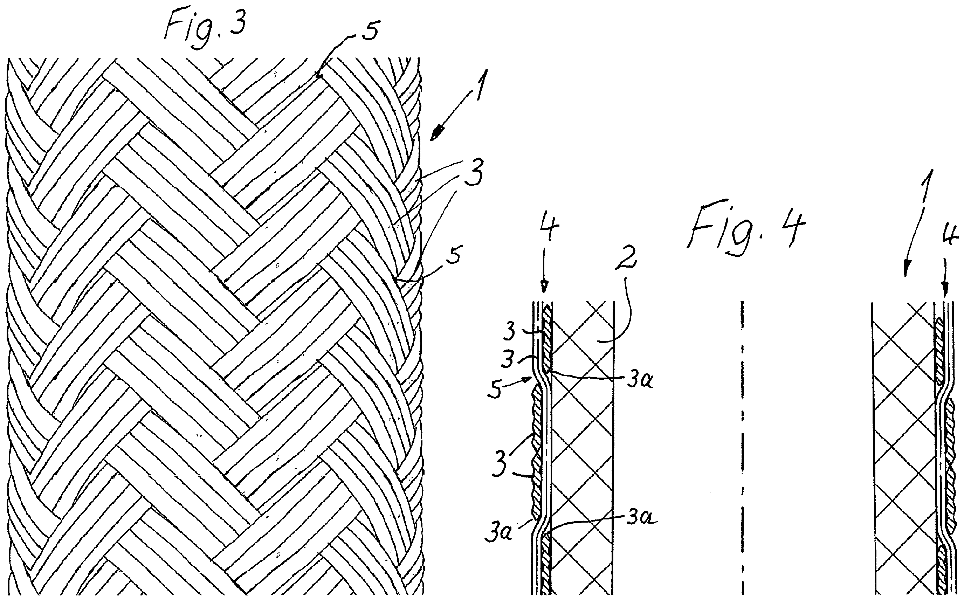

Von einem im Ganzen mit 1 bezeichneten Sanitärschlauch ist in den Figuren 1 und 3 jeweils ein Stück einer Außenansicht dargestellt, wobei Fig. 1 einen Sanitärschlauch gemäß dem Stand der Technik und Fig. 3 ein Ausführungsbeispiel gemäß der Erfindung zeigen.

Der Sanitärschlauch 1 besteht dabei jeweils analog EP 1 880 812 B1 aus einem Innenschlauch 2 und einer den Innenschlauch 2 umschließenden, aus sich kreuzenden Geflechtteilen 3 geflochtenen Ummantelung 4.

Dabei ist das Geflecht sowohl im Stand der Technik als auch bei der Erfindung nach einem übereinstimmenden Prinzip aufgebaut, bei welchem sich jeweils Geflechtteile 3 kreuzen, wobei ein Geflechtteil immer zwei kreuzende Geflechtteile über- oder untergreift und dabei aber zwei ein Geflechtteil kreuzende und quer dazu verlaufende Geflechtteile abwechselnd über und unter diesem verlaufen, wie es im Stand der Technik und beispielsweise auch aus EP 1 880 812 B1 bekannt ist.

Beim Stand der Technik ist dabei gemäß Fig. 2 vorgesehen, dass die einzelnen Geflechtteile 3 aus Gruppen von vier einzelnen Drähten oder Filamenten gebildet sind, die parallel zueinander und sich berührend angeordnet sind, sodass an den Kreuzungsstellen 5 aufgrund der Querschnitte dieser sich kreuzenden Drähte oder Filamente unweigerlich relativ große Lücken 6 frei bleiben, selbst wenn das Geflecht mit großer Kraft gebildet und angebracht wird.

Bei dem erfindungsgemäßen Ausführungsbeispiel gemäß den Figuren 3 und 4 werden diese relativ großen Lücken 6 an den Kreuzungsstellen 5 durch mehrere vor allem in Fig. 4 erkennbare Maßnahmen weitestgehend vermieden.

Dabei erkennt man in Fig. 4, dass wenigstens eines der Geflechtteile 3 als einstückiges Bändchen ausgebildet ist, dessen Breite größer als seine Dicke und dessen breite.Seite dem Innenschlauch 2 zugewandt ist.

Gleichzeitig erkennt man in Fig. 4, dass zumindest die dabei im Querschnitt erkennbaren Geflechtteile 3 alle als Bändchen ausgebildet sind, auch die etwa im mittleren Bereich der Fig. 4 einander unmittelbar berührenden Geflechtteile 3, die mit einem Längsrand in diesem Schnittbereich aneinander liegen. Zweckmäßigerweise sind dabei auch die querverlaufenden, in Fig. 4 in Seitenansicht erkennbaren Geflechtteile 3 als derartige Bändchen mit übereinstimmendem Querschnitt ausgebildet.

Während bei der Anordnung gemäß Fig. 2 entsprechend dem Stand der Technik die Ränder der Geflechtteile 3 jeweils von einzelnen Drähten oder Filamenten mit entsprechendem Querschnitt gebildet sind und also einen relativ schroffen Rand haben, ist im Ausführungsbeispiel gemäß Fig. 4 vorgesehen, dass die Querschnittsdicke der ein Geflechtteil 3 bildenden Bändchen an den Rändern 3a abnimmt und sich die Ränder 3a des jeweiligen Bändchens im Querschnitt gesehen von der größten Querschnittsdicke ausgehend stetig verjüngen. Entsprechend gut kann sich ein als Bändchen ausgebildetes Geflechtteil 3 an diese sich verjüngenden Ränder 3a anschmiegen, wie man es in Fig. 4 an den Kreuzungsstellen 5 gut erkennt. Entsprechend geringer ist eine dort eventuell entstehende Lücke 6 bzw. kann eine solche Lücke 6 kaum entstehen, da die Geflechtteile 3 auch mit ihren Rändern 3a in den parallel zueinander verlaufenden Bereichen näher beieinander zu liegen kommen, als es mit einzelnen Drähten oder Filamenten aufgrund der sich kreuzenden Drähte oder Filamente gemäß Fig. 2 möglich ist.

Im Ausführungsbeispiel gemäß Fig. 4 ist dabei jede Verjüngung an den Rändern 3a eines ein Geflechtteil 3 bildenden Bändchens symmetrisch zu der zwischen den breiten Seiten des Bändchens angeordneten Längsmitte und auch zu der zwischen den Rändern 3a verlaufenden Mitte dieses Bändchens.

Zwar könnten die die Verjüngung der Ränder 3a bildenden Schrägflächen auch unsymmetrisch zu der zwischen den Breiten des Bändchens angeordneten Längsmitte verlaufen, jedoch ist die symmetrische Ausbildung im Zusammenhang mit dem gesamten Geflecht der Ummantelung 4 am einfachsten zu handhaben.

Das Ende des Querschnitts der Verjüngung des Randes 3a ist gemäß Fig. 4 nahezu spitz, bevorzugt aber auch etwas verrundet, um insbesondere auch bei einer Herstellung der Geflechtteile 3 aus Metall oder auch aus widerstandsfähigem Kunststoff einer Verletzungsgefahr bei der Handhabung vorzubeugen.

Der Querschnitt der Verjüngung am Rand 3a der Bändchen ist dabei gemäß Fig. 4 geradlinig. Der von den die Verjüngung begrenzenden Flächen eingeschlossene Winkel ist ein spitzer Winkel, was dem Verlauf der kreuzenden Geflechtteile 3 bzw. Bändchen entgegenkommt.

Dabei zeigt das Ausführungsbeispiel, dass die Breite des jeweiligen Bändchens deutlich größer als die Querschnittsdicke ist, was den Stand der Technik insoweit nachbildet, als dabei die einander berührenden parallelen einzelnen Drähte oder Filamente gemäß Ihrer Anzahl ebenfalls eine entsprechend größere Breite als Dicke haben. Vier aneinander liegende Filamente oder Drähte ergeben beispielsweise eine viermal so große Breite gegenüber der Dicke.

Bei den in Fig. 4 erkennbaren Bändchen ist die Breite demgegenüber gegenüber der Querschnittsdicke noch etwas größer beziehungsweise die Dicke relativ zur Breite geringer.

Die breiten Seiten der Bändchen sind im Ausführungsbeispiel gemäß Fig. 4 zwischen dessen Rändern 3a im Querschnitt gesehen gewellt ausgebildet und zwar auf beiden Seiten des jeweiligen Bändchens, wobei nebeneinander abwechselnd dicke und dünnere Bereiche angeordnet sind. Einer Welle auf der einen Seite des Bändchens liegt eine solche Welle auf der anderen Seite gegenüber und die zwischen den Wellen befindlichen Täler der beiden Seiten befinden sich ebenfalls etwa an derselben Stelle, sodass dickere und dünnere Querschnitte in Längsrichtung des jeweiligen Bändchens nebeneinander liegen und somit dieses als Bändchen ausgebildete Geflechtteil 3 eine vergleichbare oder bessere Flexibilität um seine Längsachse hat wie ein aus einzelnen parallelen und aneinander liegenden Drähten oder Filamenten gebildetes derartiges Geflechtteil 3.

Je nach Anforderung können die Geflechtteile 3 der Ummantelung 4 aus Metall oder aus Kunststoff bestehen, wobei entweder alle Geflechtteile 3 aus demselben Werkstoff bestehen oder aber Geflechtteile 3 aus Metall mit solchen aus Kunststoff gemischt vorgesehen sein können. Auch könnten Kunststoffbeschichtete oder Kunststoffummantelte Bändchen als Geflechtteile 3 vorgesehen sein.

Der Sanitärschlauch 1 weist einen Innenschlauch 2 und eine den Innenschlauch 2 umschließende, aus sich kreuzenden Geflechtteilen 3 geflochtene Ummantelung 4 auf. Wenigstens eines der Geflechtteile 3 oder bevorzugt alle Geflechtteile 3 sind dabei als einstückige Bändchen ausgebildet, die somit aus einzelnen aneinander liegenden Drähten oder Filamenten gebildete derartige mehrteilige Geflechtteile ersetzen. Dabei ist die Breite dieses Bändchens größer als seine Dicke und die breite Seite dieser Geflechtteile 3 ist dem Innenschlauch 2 zugewandt. Die Ränder 3a dieser bändchenförmigen Geflechtteile 3 verjüngern sich im Querschnitt, sodass sie nach außen konisch verlaufen und dadurch eine bessere Anpassung von kreuzenden Geflechtteilen 3 auch an den Kreuzungsstellen 5 erlauben.

## Patentansprüche

1. Sanitärschlauch (1) mit einem Innenschlauch (2) insbesondere aus Kunststoff, und mit einer den Innenschlauch (2) umschließenden, aus sich kreuzenden Geflechtteilen (3) geflochtenen Ummantelung (4), von welchen Geflechtteilen (3) wenigstens eines der Geflechtteile (3) als einstückiges Bändchen ausgebildet ist, dessen Breite größer als seine Dicke und dessen breite Seite dem Innenschlauch (2) zugewandt ist, wobei die Querschnittsdicke des ein Geflechtteil (3) bildenden Bändchens an wenigstens einem seiner Ränder oder an beiden Rändern (3a) abnimmt, **dadurch gekennzeichnet, dass** sich die Ränder (3a) des Bändchens im Querschnitt gesehen gestuft oder stetig verjüngen, und dass zumindest eine der breiten Seite des Bändchens zwischen dessen Rändern (3a) im Querschnitt gesehen gewellt ist und der Querschnitt des einstückigen Bändchens aus nebeneinander abwechselnd dickeren und dünneren Bereichen besteht.

2. Sanitärschlauch nach Anspruch 1, **dadurch gekennzeichnet, dass** alle in Gebrauchsstellung miteinander verflochtenen und sich kreuzenden Geflechtteile (3) als Bändchen ausgebildet sind.

3. Sanitärschlauch nach Anspruch 1 oder 2, **dadurch gekennzeichnet, dass** jede Verjüngung an den Rändern (3a) eines Bändchens symmetrisch zu der zwischen den breiten Seiten des Bändchens angeordneten Längsmitte und/oder zu der zwischen den Rändern (3a) verlaufenden Mitte ist.

4. Sanitärschlauch nach einem der Ansprüche 1 bis 3, **dadurch gekennzeichnet, dass** das Ende des Querschnitts der Verjüngung des Randes (3a) wenigstens einer Längsseite oder beider Längsseiten des Bändchens spitz oder verrundet ist.

5. Sanitärschlauch nach einem der Ansprüche 1 bis 4, **dadurch gekennzeichnet, dass** der Querschnitt der Verjüngung am Rand (3a) des Bändchens geradlinig oder wenigstens einseitig konvex und/oder konkav begrenzt ist.

6. Sanitärschlauch nach einem der Ansprüche 1 bis 5, **dadurch gekennzeichnet, dass** der von den die Verjüngung begrenzenden Flächen eingeschlossene Winkel ein spitzer Winkel, insbesondere ein rechter oder ein dem gegenüber kleinerer Winkel von 90° bis 20°, insbesondere von 70° bis 40°, vorzugsweise von 60° bis 50° ist.

7. Sanitärschlauch nach einem der Ansprüche 1 bis 6, **dadurch gekennzeichnet, dass** die Querschnittsdicke des Bändchens zwischen seinen Verjüngungen etwa ein Zehntel Millimeter bis zwei Fünftel Millimeter, vorzugsweise ein Fünftel Millimeter bis ein Viertel Millimeter und die Gesamtbreite etwa eineinviertel Millimeter bis zwei Millimeter oder mehr oder einen Zwischenwert beträgt.

8. Sanitärschlauch nach einem der Ansprüche 1 bis 7, **dadurch gekennzeichnet, dass** die Breite des Bändchens fünf Mal bis zwanzig Mal, sieben Mal bis zehn Mal, zwei Mal bis acht Mal oder vier Mal bis sechs Mal so groß wie seine Dicke ist.

9. Sanitärschlauch nach einem der Ansprüche 1 bis 8, **dadurch gekennzeichnet, dass** beide breiten Seiten des Bändchens zwischen dessen Rändern (3a) im Querschnitt gesehen gewellt sind und dass die Wellenberge und die Wellentäler an beiden breiten Seiten des Bändchens insbesondere an übereinstimmenden Stellen angeordnet sind, so dass sich dickere und dünnere Querschnittsbereiche über die Breite des Bändchens verteilt abwechseln.

10. Sanitärschlauch nach einem der Ansprüche 1 bis 9, **dadurch gekennzeichnet, dass** die Geflechtteile (3) der Ummantelung (4) aus Metall und/oder aus Kunststoff bestehen und alle Geflechtteile (3) einer Ummantelung (4) aus demselben Werkstoff bestehen oder Geflechtteile (3) aus Metall und aus Kunststoff zur Bildung der Ummantelung (4) gemischt vorgesehen sind.

## Claims

1. Sanitary hose (1) having an inner hose (2), in particular made from synthetic material, and having a sheath (4) braided from mutually intersecting braiding parts (3) and surrounding the inner hose (2), at least one of the braiding parts (3) being formed as a single-part ribbon, the width thereof being greater than the thickness thereof, and the wide side thereof facing the inner hose (2), wherein the cross-sectional thickness of the ribbon forming a braiding part (3) decreases at at least one of its edges or at both edges (3a), **characterised in that** the edges (3a) of the ribbon taper, in a stepped or continuous manner, as seen in cross-section, and **in that** at least one of the wide sides of the ribbon is undulated between the edges (3a) thereof, as seen in cross-section, and the cross-section of the single-part ribbon consists of neighbouring alternately thicker and thinner regions.

2. Sanitary hose as claimed in claim 1, **characterised in that** all of the braiding parts (3), which in the use position are mutually interlaced and mutually intersecting, are formed as a ribbon.

3. Sanitary hose as claimed in claim 1 or 2, **characterised in that** each taper at the edges (3 a) of a ribbon is symmetrical to the longitudinal centre arranged between the wide sides of the ribbon and/or to the centre extending between the edges (3a).

4. Sanitary hose as claimed in any one of claims 1 to 3, **characterised in that** the end of the cross-section of the taper of the edge (3a) of at least one long side or both long sides of the ribbon is pointed or rounded.

5. Sanitary hose as claimed in any one of claims 1 to 4, **characterised in that** the cross-section of the taper at the edge (3a) of the ribbon is delimited in a linear manner or on at least one side in a convex and/or concave shape.

6. Sanitary hose as claimed in any one of claims 1 to 5, **characterised in that** the angle formed by the surfaces delimiting the taper is an acute angle, in particular a right angle or a relatively smaller angle of 90° to 20°, in particular 70° to 40°, preferably 60° to 50°.

7. Sanitary hose as claimed in any one of claims 1 to 6, **characterised in that** the cross-sectional thickness of the ribbon between the tapers thereof is approximately one tenth of a millimetre to two fifths of a millimetre, preferably one fifth of a millimetre to one quarter of a millimetre and the overall width is approximately one and a quarter millimetres to two millimetres or more or an intermediate value.

8. Sanitary hose as claimed in any one of claims 1 to 7, **characterised in that** the width of the ribbon is five times to twenty times, seven times to ten times, two times to eight times, or four times to six times, as large as the thickness thereof.

9. Sanitary hose as claimed in any one of claims 1 to 8, **characterised in that** the two wide sides of the ribbon are undulated between the edges (3a) thereof as seen in cross-section, and **in that** the wave peaks and the wave troughs are arranged on both wide sides of the ribbon in particular at mutually corresponding locations so that thicker and thinner cross-sectional regions are distributed alternately over the width of the ribbon.

10. Sanitary hose as claimed in any one of claims 1 to 9, **characterised in that** the braiding parts (3) of the sheath (4) consist of metal and/or synthetic material, and all of the braiding parts (3) of a sheath (4) consist of the same material, or a mix of braiding parts (3) made of metal and of synthetic material is provided for the formation of the sheath (4).

## Revendications

1. Flexible sanitaire (1) comprenant un flexible intérieur (2), en particulier en matière plastique, et une enveloppe (4) entourant le flexible intérieur (2) et tressée à partir de parties tressées qui se croisent (3), parties tressées (3) parmi lesquelles au moins une des parties tressées (3) est réalisée sous forme de bandelette d'une seule pièce, dont la largeur est plus grande que son épaisseur et dont le côté large est tourné vers le flexible intérieur (2), dans lequel l'épaisseur de section transversale de la bandelette formant une partie tressée (3) diminue à au moins un de ses bords ou aux deux bords (3a), **caractérisé en ce que** les bords (3a) de la bandelette, vus en coupe transversale, sont étagés ou s'amincissent en continu, et **en ce qu'**au moins un des côtés larges de la bandelette, vu en coupe transversale, est ondulé entre ses bords et la section transversale de la bandelette d'une seule pièce se compose de zones plus épaisses et plus minces disposées en alternance l'une à côté de l'autre.

2. Flexible sanitaire selon la revendication 1, **caractérisé en ce que** toutes les parties tressées (3) qui en position d'utilisation sont tressées les unes avec les autres et se croisent sont réalisées sous forme de bandelettes.

3. Flexible sanitaire selon la revendication 1 ou 2, **caractérisé en ce que** chaque amincissement aux bords (3a) d'une bandelette est symétrique par rapport au milieu longitudinal disposé entre les côtés larges de la bandelette et/ou par rapport au milieu s'étendant entre les bords (3a).

4. Flexible sanitaire selon l'une quelconque des revendications 1 à 3, **caractérisé en ce que** l'extrémité de la section transversale de l'amincissement du bord (3a) d'au moins un côté longitudinal ou des deux côtés longitudinaux de la bandelette est pointue ou arrondie.

5. Flexible sanitaire selon l'une quelconque des revendications 1 à 4, **caractérisé en ce que** la section transversale de l'amincissement au bord (3a) de la bandelette est limitée de façon rectiligne ou au moins sur un côté de façon convexe et/ou concave.

6. Flexible sanitaire selon l'une quelconque des revendications 1 à 5, **caractérisé en ce que** l'angle formé par les faces formant l'amincissement est un angle aigu, en particulier un angle droit ou au contraire un angle plus petit que 90° à 20°, en particulier de 70° à 40°, de préférence de 60° à 50°.

7. Flexible sanitaire selon l'une quelconque des revendications 1 à 6, **caractérisé en ce que** l'épaisseur de section transversale de la bandelette entre ses amincissements vaut environ un dixième de millimètre à deux cinquièmes de millimètre, de préférence un cinquième de millimètre à un quart de millimètre, et la largeur totale vaut environ un millimètre et un quart à deux millimètres ou plus ou une valeur intermédiaire.

8. Flexible sanitaire selon l'une quelconque des revendications 1 à 7, **caractérisé en ce que** la largeur de la bandelette est cinq fois à vingt fois, sept fois à dix fois, deux fois à huit fois ou quatre fois à six fois plus grande que son épaisseur.

9. Flexible sanitaire selon l'une quelconque des revendications 1 à 8, **caractérisé en ce que** les deux côtés larges de la bandelette entre ses bords (3a), vue en coupe transversale, sont ondulés et **en ce que** les crêtes des ondes et les vallées des ondes sur les deux côtés larges de la bandelette sont disposées en particulier à des positions correspondantes, de telle manière que des zones de section transversale plus épaisses et plus minces soient réparties en alternance sur la largeur de la bandelette.

10. Flexible sanitaire selon l'une quelconque des revendications 1 à 9, **caractérisé en ce que** les parties tressées (3) de l'enveloppe (4) sont constituées de métal et/ou de matière plastique et toutes les parties tressées (3) d'une enveloppe (4) se composent du même matériau ou des parties tressées (3) sont prévues en mélange en métal et en matière plastique pour la formation de l'enveloppe (4).
